# EUROPÄISCHE PATENTANMELDUNG

(11) **EP 1 317 090 A1**
(43) Veröffentlichungstag der Anmeldung: **04.06.2003**
(21) Anmeldenummer: 01128547.5
(22) Anmeldetag: 29.11.2001
(51) Int. Cl.: H04L 1/00, H04L 1/08

(54) **Verfahren und Vorrichtung zum Codieren verschiedener Paketdaten für verschiedene Empfänger**

(71) Anmelder: SIEMENS AKTIENGESELLSCHAFT, 80333 München (DE)
(72) Erfinder: Bossert, Martin, Prof., 89075 Ulm (DE); Schulz, Egon, Dr., 80993 München (DE)

(57) **Zusammenfassung**

Die Erfindung bezieht sich auf ein Verfahren zum Bereitstellen und Übertragen von redundanten Daten in einem Kommunikationssystem (GSM), bei dem Daten (D1, D2, D3) von einer senderseitigen Station (BS) über eine Schnittstelle (V) an damit kommunizierende empfängerseitige Stationen (MS1, MS2, MS3) übertragen werden und bei dem zu den zu versendenden Daten (D1, D2, D3) senderseitig redundant codierte Daten (R1, R2) erzeugt werden, wobei die Daten (D1, D2, D3) für zumindest zwei der empfängerseitigen Stationen (MS1, MS2, MS3) senderseitig vor dem Erzeugen der redundant codierten Daten zusammengefasst werden und aus den zusammengefassten Daten (D = D1 + D2 + D3) die codierten Daten (C = C1 + C2 + C3) erzeugt werden.

Um die Qualität der Fehlerkorrektur zu verbessern, wird vorgeschlagen, zum Versenden über die Schnittstelle (V) redundant codierte Daten (C2', C3') aus den zusammengefassten Daten (D = D1 + D2 + D3) bzw. daraus erzeugten codierten Daten (C = C1 + C2 + C3) mit ungleich großen Anteilen redundanter Datenanteile (C2' bzw. C3') für die verschiedenen empfängerseitigen Stationen (MS2, MS3) zu erzeugen.

## Beschreibung

Die Erfindung bezieht sich auf ein Verfahren zum Codieren von Paketdaten mit den oberbegrifflichen Merkmalen des Patentanspruchs 1 bzw. eine Vorrichtung zum Durchführen eines solchen Verfahrens.

Bei Mobilfunksystemen, beispielsweise gemäß dem Standard GSM (Global System for Mobile communication) oder dem UMTS (Universal Mobile Telecommunications System) werden Daten bzw. Datenpakete, die von einer netzseitigen Station zu teilnehmerseitigen Stationen gesendet werden, vor dem Versenden pro Teilnehmer bzw. Empfänger gegen Kanalstörungen kanalcodiert und pro Teilnehmer bzw. Empfänger separat übertragen. Die dabei erzielte Fehlerrate ist abhängig vom Kanal und vom verwendeten Code. Die Fehlerkorrektureigenschaften verbessern sich bei Kanalcodierungen mit der Länge des Kanalcodes. Ein Code mit einer großen Blocklänge hat durch die Einfügemöglichkeit von mehr Redundanz entsprechend eine bessere Fehlerkorrektureigenschaft als ein kurzer Code.

Kanalcodierungen werden dabei sowohl in Abwärtsrichtung (Downlink), also von einer netzseitigen Station zu einer teilnehmerseitigen Station, als auch in Aufwärtsrichtung (Uplink), also in Richtung von einer teilnehmerseitigen Station zu einer netzseitigen Station, jeweils separat pro Verbindung auf die zu übertragenden Daten zum Schutz gegen Kanalstörungen angewendet. Bekannt ist aus dem UMTS ferner, in Abwärtsrichtung die Daten für mehrere Teilnehmer zusammenzufassen und gemeinsam zu codieren. Dadurch wird der entsprechende Code insgesamt entsprechend länger und folglich die Bitfehlerrate pro Daten für einen bestimmten Empfänger kleiner.

Die Aufgabe der Erfindung besteht darin, ein derartiges Verfahren zum Codieren von Daten zu verbessern bzw. eine Vorrichtung zum Durchführen eines solchen Verfahrens vorzuschlagen.

Diese Aufgabe wird durch ein Verfahren zum Codieren von Daten mit den Merkmalen des Patentanspruchs 1 bzw. Vorrichtungen mit den Merkmalen der Patentansprüche 5 bzw. 6 gelöst. Vorteilhafte Ausgestaltungen sind Gegenstand von abhängigen Ansprüchen.

Ein solches Verfahren zum Bereitstellen und Übertragen von redundant codierten Daten in einem Kommunikationssystem, bei dem zum Versenden über die Schnittstelle codierte Daten aus den zuvor zusammengefassten Daten oder aus daraus erzeugten codierten Daten mit ungleich großen redundanten Datenanteilen für die verschiedenen empfängerseitigen Stationen erzeugt werden, umfasst somit entsprechend die Möglichkeit einer Wichtung der Redundanz für einzelne der Empfängerstationen oder einzelne der zu sendenden Daten vor, während oder nach der eigentlichen Codierung zur Hinzufügung von Redundanz zu den Daten.

Zum Erzeugen eines größeren Anteils redundanter Daten kann neben einem Wiederholungsverfahren auch ein beliebiges anderes geeignetes Verfahren verwendet werden, z.B. eine weitere, zusätzliche Kanalcodierung für die entsprechenden Datenanteile oder bereits codierten Datenanteile.

Ein Ausführungsbeispiel wird nachfolgend anhand der Zeichnung näher erläutert. Es zeigen:
- Fig. 1: schematisch eine Anordnung von miteinander kommunizierenden Stationen und zwischen diesen ausgetauschten Datenpaketen;
- Fig. 2: zwei Blockdarstellungen zum Veranschaulichen eines für sich bekannten Codierungsverfahrens;
- Fig. 3: ein Blockschema zum Veranschaulichen eines vorteilhaften Codierungsverfahrens.

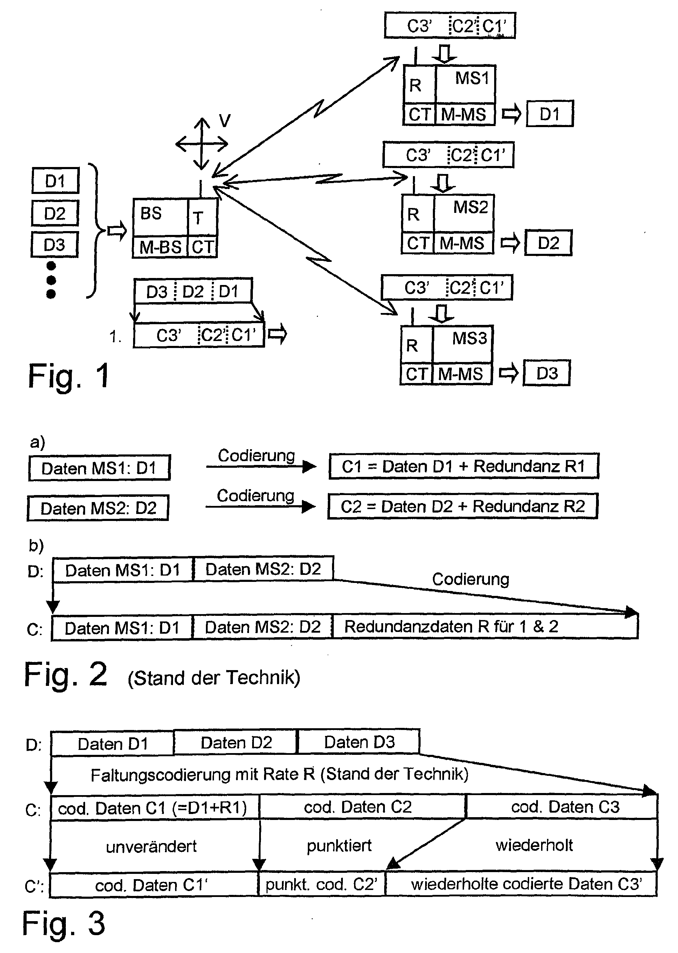

Wie aus Fig. 2a ersichtlich, werden bei herkömmlichen Codierungsverfahren zum Durchführen einer Kanalcodierung Daten D1 bzw. Datenpakete, die einem ersten Empfänger bzw. einer ersten empfangenden Station MS1 zugeordnet sind, codiert, wodurch ein zu versendendes Datenpaket C1 entsteht, welches aus Daten D1 und redundanten Daten R1 besteht. Ebenso wird mit Daten D2 für einen zweiten Empfänger MS2 verfahren.

In verbesserter Ausführungsform werden, wie aus Fig. 2b ersichtlich, Daten D1 für einen ersten Teilnehmer bzw. Empfänger MS1 und Daten D2 für einen zweiten Teilnehmer bzw. Empfänger MS2 hintereinander angeordnet und gemeinsam codiert. Die dabei entstehende Datenfolge zum Versand über die Schnittstelle besteht aus Daten D1 für einen ersten Empfänger, Daten D2 für einen zweiten Empfänger und einem weiteren Datenblock mit für beide Empfänger gemeinsamen redundanten Daten R3. Dieses Schema ist prinzipiell auch auf mehr als die Daten für zwei Empfänger erweiterbar.

Wie aus Fig. 1 ersichtlich, findet eine Anwendung eines solchen Verfahrens zum Codieren von an verschiedene Empfänger bzw. empfangende Stationen MS1 - MS3 zu versendenden Daten D1 - D3 insbesondere in Abwärtsrichtung statt. In einer netzseitigen, sendenden Station BS werden Daten bzw. Datenpakete D1, D2, D3 zum Versand über eine Funkschnittstelle V bereitgestellt. Diese Daten D1 - D3 können in der netzseitgen Station BS erzeugt oder von anderen Einrichtungen aus zu dieser netzseitigen Station BS übertragen worden sein.

Zum zwischenzeitlichen Abspeichern der Daten bzw. Datenpakete D1 - D3 weist die netzseitige Station BS, die nachfolgend auch als sendende Station bezeichnet wird, einen Speicher oder Speicherabschnitt M-BS auf. Ferner weist die sendende Station BS eine Steuereinrichtung CT und eine Sendeeinrichtung bzw. Sende-/Empfangseinrichtung T zum Verarbeiten, Steuern und Durchführen des Sendebetriebs über die Funkschnittstelle V auf.

Die in der sendenden Station BS bereitgestellten Daten D1 - D3 werden gemeinsam codiert, d.h. mit Redundanz versehen und als redundant codierte Daten C1' - C3' (1. in Fig. 1) über die Funkschnittstelle V zu empfängerseitigen bzw. empfangenden Stationen MS1, MS2, MS3 übertragen.

Diese empfängerseitigen Stationen MS1 - MS3 weisen ebenfalls für deren Betrieb erforderliche Einrichtungen auf, insbesondere eine Steuereinrichtung CT, eine Empfangs- bzw. Sende-/Empfangseinrichtung R sowie einen Speicher oder Speicherabschnitt M-MS zum zwischenzeitlichen Abspeichern empfangener codierter Datenpakete oder Daten C' = C1' + C2' + C3'. Alle empfangenden Stationen MS1 - MS3 empfangen dabei die gesamte Codierte Datenfolge C'. Diese codierte Datenfolge C' wird dann in den einzelnen empfangenden Stationen MS1 - MS3 jeweils decodiert und für die jeweilige Station MS1, MS2 bzw. MS3 werden die für diese Station MS1, MS2 bzw. MS3 bestimmten Anteile der rekonstruierten Daten D1, D2 bzw. D3 extrahiert. Dies kann optional auch direkt während der Decodierung durchgeführt werden.

Durch Kanalcodierung wird diesen Datenpaketen D1, D2 bzw. D3 Redundanz R1, R2 bzw. R3 hinzugefügt. Dadurch resultiert das über die Funkschnittstelle V zu übertragende Codewort C' bzw. zuvor C = "C1 + C2 + C3" aus den zu übertragenden Daten D1 und deren Redundanz R1 (bzw. D2 und R2, D3 und R3). Durch die vorteilhafte Zusammenfassung von Daten für verschiedene Empfänger werden die tatsächlich zu übertragenden Nutzdaten bzw. Nettodaten zu einem gemeinsamen Datenblock zusammengefasst. Dieser zusammengesetzte Datenblock D wird dann mit den gemeinsamen Daten codiert, so dass ein Codewort C mit den Daten D = D1 + D2 +... und einer Redundanz R = R1 + R2 +... entsteht. Insbesondere kann die gesamte Redundanz R für alle empfängerseitigen Stationen Ms1, Ms2,... zur Rekonstruktion der ursprünglichen, zu versendenden Daten gleichzeitig benutzt werden.

Wie aus Fig. 3 deutlicher ersichtlich, ist es nicht nur möglich, Daten für verschiedene empfängerseitige Stationen MS1-MS3 vor der Codierung zusammenzufassen, sondern auch eine unterschiedliche Verteilung für die verschiedenen Datenströme, Daten bzw. Datenblöcke D1 - D3 bei der Codierung vorzunehmen. Dadurch kann die Redundanz für die einzelnen Datenströme entsprechend den tatsächlichen Kanaleigenschaften auf den einzelnen Verbindungsstrecken auf der Funkschnittstelle V durch unterschiedliche Verteilung geeignet angepasst werden.

Beim in Fig. 3 dargestellten Ausführungsbeispiel werden die Daten D1 für die empfängerseitigen Stationen MS1 - MS3 in übliche Art und Weise gemeinsam codiert und übertragen. In der ersten Zeile in Fig. 3 sind entsprechend die Daten D = D1 + D2 + D3 für die drei Teilnehmer bzw. die drei empfängerseitigen Stationen MS1, MS2 bzw. MS3 dargestellt. In der zweiten Zeile sind dazu codierte Daten C = C1 + C2 + C3 dargestellt, die sich aus der Kanalcodierung ergeben. Die bildliche Trennung in der Zeichnung dient dabei nur zur Veranschaulichung, dass Datenanteile verschiedener Datenquellen oder für verschiedene Empfänger vorhanden sind. Tatsächlich sind die einzelnen Anteile der Daten und/oder codierten Daten aber je nach Codierungsverfahren unter Umständen auch miteinander vermischt und/oder codiert.

Über die Funkschittstelle V werden jedoch bereitgestellte codierte Daten C' mit einer zusätzlichen Verarbeitung übertragen, wie dies aus der dritten Zeile ersichtlich ist.

Die codierten Daten C' für die zweite teilnehmerseitige Station MS2 sollen beim dargestellten Ausführungsbeispiel mit guten Bedingungen übertragen werden können, so dass wenige oder keine Fehler auftreten. Entsprechend wird zur empfängerseitigen Korrektur in der empfängerseitigen zweiten Station MS2 keine oder nur wenig Redundanz benötigt. Wie aus der mittleren Zeile ersichtlich, werden zwar entsprechend aus den Anteilen der Daten D2 für die zweite empfängerseitige Station MS2 codierte Daten C2 bereitgestellt, jedoch nicht in diesem Umfang übertragen. Die codierten Daten C2 für die zweite empfängerseitige Station MS2 werden mittels beispielsweise für sich bekannter Punktierung (puncturing) auf eine geringere Datenmenge C2' reduziert und für die Übertragung im Datenstrom C' bereitgestellt, wie dies aus der unteren Zeile ersichtlich ist. Alternativ ist es auch möglich, anstelle einer üblichen Codierung und anschließenden Punktierung direkt aus den ursprünglichen Daten D2 punktierte, codierte Daten C2' bereit zu stellen. Auch bei der Darstellung der dritten Zeile aus Fig. 3 dient die Trennung in einzelne codierte Datenblöcke C1' - C3' wieder nur zur Veranschaulichung des Prinzips.

Die frei verfügbare Blocklänge für weitere zu übertragende codierte Daten ist somit größer geworden. Entsprechend können ursprüngliche Daten D3 für die dritte empfängerseitige Station MS3 in üblicher Art und Weise zu Daten C3 codiert und anschließend mittels einer Art Rahmenfüllung, die auch als repeating oder bit-stuffing bezeichnet wird, bereitgestellt werden. Mit anderen Worten kann die Redundanz für die Daten D3 durch Bereitstellung einer größeren codierten Anzahl von Daten C3' für die Übertragung zur Dritten empfängerseitigen Station MS3 erhöht werden. Alternativ ist natürlich auch direkt die Erzeugung einer entsprechend größeren codierten Datenmenge von Daten C3' aus den ursprünglichen Daten D3 möglich.

Insbesondere erfolgt eine vorherige Zusammenfassung der ursprünglichen Daten D1 - D3 für die verschiedenen empfängerseitigen Stationen MS1 - MS3 vor der Codierung, wie dies z.B. anhand Fig. 2b erläutert ist.

Vorteilhafterweise kann also mittels eines solchen Verfahrens die Redundanz für eine Anzahl von Verbindungen reduziert werden, um die Redundanz für andere Verbindungen erhöhen zu können. Dadurch können auf diesen anderen Verbindungen mehr Fehler der ursprünglichen zugeordneten Datenblöcke korrigiert werden. Kann beispielsweise ein Code für jeden separaten Datenstrom bzw. Datenblock drei Fehler korrigieren, so kann der neue Code mit einer doppelten Codewortlänge für die beiden zusammengefassten Datenstöme insgesamt sechs Fehler korrigieren. Durch Umverteilung ist es insbesondere auch möglich, die Anzahl der korrigierbaren Fehler entsprechend den tatsächlichen oder zu erwartenden Bedürfnissen der beiden Datenströme umzuverteilen.

Die Anwendung sogenannter Faltungscodes, wie sie für sich genommen bekannt sind, kann in vergleichbarer Art und Weise erfolgen. Die Daten D1, D2, D3,... von zwei oder mehr Datenströmen für verschiedene empfängerseitige Stationen MS1, MS2, MS3,... werden empfängerseitig in dem Speicher M-BS zwischengespeichert, hintereinander angeordnet und anschließend mit dem gleichen Code faltungscodiert. Nachdem die Daten D1, D2, D3, ... faltungscodiert als codierte Daten C = C1 + C2 + C3 +... bereitgestellt sind, wird für die Datenanteile der einzelnen Datenströme D1, D2, D3, ... je nach Bedarf keine Maßnahme, eine Punktierung oder eine Wiederholung (Repetition) durchgeführt. Dies wird auch als Rate Matching, d.h. Anpassung an die verfügbare Datenrate bezeichnet. Für die Entscheidung, ob eine Punktierung oder Wiederholung durchzuführen ist, werden die Funktionen der Kanaleigenschaften oder der Entfernungen zu den betreffenden empfängerseitigen Stationen bzw. Empfängern MS1 - MS3 berücksichtigt. Zweckmäßigerweise wird bei einer Anwendung von Punktierung oder Wiederholung die Gesamtsumme der codierten Daten C = C1 + C2 + C3 gleich gelassen.

Zur Veranschaulichung können in Verbindung damit in einem ersten Fall Daten für einen ersten Teilnehmer bzw. eine erste empfängerseitige Station MS1 mit einem binären 3-Fehler-korrigierenden BCH-Code (30,15,7) (BCH: Bose, Chaudhuri, Hocquenhem) codiert werden. Bei diesem Beispiel würde die Blocklänge n = 30 Bit betragen und die Länge der Informationsdaten k = 15 Bit betragen, so dass sich die Anzahl der redundanten Bit zu n - k = 15 ergibt. Die sogenannte Hammingdistanz bestimmt sich aus dem Zweifachen der Anzahl der zulässigen Fehler plus 1, im vorliegenden Beispiel also sieben. In diesem Fall werden somit jeweils zu 15 Informationsbit 15 Bit Redundanz hinzugefügt, so dass das zu übertragende Codewort eine Blocklänge von n = 30 hat. Nachfolgend können die Datenblöcke zweier Teilnehmer zu einem Datenblock von 30 Bit zusammengefasst und mit einem 6-Fehler-korrigierenden binären BCH-Code, z. B. (63,30,13) codiert werden. Dieser Code hat dann eine Korrekturfähigkeit von sechs Fehlern bei einer fast identischen Coderate, ist somit gegenüber der Anwendung von zwei 3-Fehler-korrigierenden BCH-Codes (30,15,7) vorteilhaft.

Noch günstiger wird die Anwendung eines sogenannten, für sich bekannten Reed-Solomon-(RS)-Codes. Wird zur Codierung der einzelnen Daten für die verschiedenen Datenverbindungen ein RS-Code (31,25,7) verwendet, so ergibt sich im Vergleich dazu bei einer Zusammenfassung der Daten für zwei Verbindungen ein resultierender RS-Code von (62,50,13). Vorteilhafterweise ist es bei der Verwendung eines gemeinsamen Codes nicht weiter von Bedeutung, wo, dass heißt, auf welcher der Verbindungen zu den einzelnen empfängerseitigen Stationen MS1, MS2,..., Fehler aufgetreten sind. Die empfängerseitigen Stationen MS1, MS2,... müssen natürlich von der Verwendung einer zusammengefassten Codierung entsprechend Kenntnis haben oder informiert werden, um eine entsprechende Verarbeitung der empfangenen Daten vornehmen zu können.

## Patentansprüche

1. Verfahren zum Bereitstellen und Übertragen von Daten in einem Kommunikationssystem (GSM), bei dem
- Daten bzw. Datenströme (D1, D2) von einer senderseitigen Station (BS) über eine Schnittstelle (V) an damit kommunizierende empfängerseitige Stationen (MS1, MS2, MS3) übertragen werden,
- wobei zu den zu versendenden Daten (D1, D2, D3) senderseitig vor der Übertragung codierte Daten (C1, C2, C3) mit Redundanz (R1, R2) erzeugt werden und
- wobei die Daten (D1, D2, D3) für zumindest zwei der empfängerseitigen Stationen (MS1, MS2, MS3) senderseitig vor dem Erzeugen der codierten Daten (C1, C2, C3) zusammengefasst werden und aus den zusammengefassten Daten (D = D1 + D2 + D3) codierte Daten (C = C1 + C2 + C3) mit Redundanz erzeugt werden,
**dadurch gekennzeichnet , dass**
- zum Versenden über die Schnittstelle (V) codierte Daten (C' = C1' + C2' + C3') aus den zusammengefassten Daten (D = D1 + D2 + D3) oder aus daraus erzeugten codierten Daten (C = C1 + C2 + C3) mit ungleich großen redundanten Datenanteilen (C2' bzw. C3') für die verschiedenen empfängerseitigen Stationen (MS2, MS3) erzeugt werden.

2. Verfahren nach Anspruch 1, bei dem
zum Erzeugen eines kleineren Anteils redundanter Daten (C2') ein Punktierungsverfahren verwendet wird.

3. Verfahren nach Anspruch 1 oder 2, bei dem
zum Erzeugen eines größeren Anteils redundanter Daten (C3') ein Wiederholungsverfahren oder eine weitere Kanalcodierung verwendet wird.

4. Verfahren nach einem vorstehenden Anspruch, bei dem die Gesamtanzahl der codierten Daten (C' = C1' + C2' + C3') beim Erzeugen dieser codierten Daten (C' = C1' + C2' + C3') mit ungleich großen redundanten Datenanteilen (C2' bzw. C3') gleich der Gesamtanzahl der hinsichtlich des Anteils ansonsten unverändert erzeugten codierten Daten (C = C1 + C2 + C3) mit gleich großen redundanten Datenanteilen (C2 bzw. C3) gesetzt wird.

5. Sendevorrichtung (BS) zum Durchführen eines Verfahrens nach einem vorstehenden Anspruch mit
- einem Speicher (M-BS) zum Zwischenspeichern zu codierender Daten (D1 - D3) für verschiedene Empfängerstationen (MS1, MS2 bzw. MS3) und
- einer Steuereinrichtung (CT) zum Zusammensetzen der zu codierenden Daten (D1 - D3) für mehrere Empfängerstationen (MS1
- MS3) und zum Erzeugen redundant codierter Daten (C1' - C3') aus den zusammengesetzten Daten.

6. Empfängervorrichtung (BS) zum Durchführen eines Verfahrens nach einem der Ansprüche 1 - 4 mit
- einem Speicher (M-BS) zum Zwischenspeichern empfangener, redundant codierter Daten (C = C1' + C2' + C3') und
- einer Steuereinrichtung (CT) zum Verarbeiten der empfangenen codierten Daten (C = C1' + C2' + C3') zum Rekonstruieren fehlerfreier ursprünglicher Daten (D1, D2 bzw. D3) aus den zusammengesetzten und codierten Daten (C = C1' + C2' + C3').
